# EUROPEAN PATENT SPECIFICATION

(11) **EP 2 669 787 B1**
(45) Date of publication and mention of the grant of the patent: **07.09.2016**
(21) Application number: 13170022.1
(22) Date of filing: 31.05.2013
(51) Int. Cl.: G06F 3/0484, G06F 3/0488, G06T 11/60

(54) **METHOD, APPARATUS AND COMPUTER PROGRAM PRODUCT FOR CROPPING SCREEN FRAME**
VERFAHREN, VORRICHTUNG UND COMPUTERPROGRAMMPRODUKT ZUM ABSCHNEIDEN EINES BILDRASTERS
APPAREIL, PROCÉDÉ ET PRODUIT DE PROGRAMME D'ORDINATEUR POUR RECADRER UNE TRAME D'ECRAN

(30) Priority: 31.05.2012 US 201261654072 P; 29.05.2013 US 201313904018
(43) Date of publication of application: 04.12.2013
(73) Proprietor: HTC Corporation, Taoyuan City 330 (TW)
(72) Inventor: Huang, Hung-Yi, 231 New Taipei City (TW); Shieh, Chia-Chia, 231 New Taipei City (TW); Chien, Chih-Ling, 231 New Taipei City (TW); Wu, Yen-Shun, 231 New Taipei City (TW); Li, Sheng-Wei, 231 New Taipei City (TW); Chang, Chien-Chuan, 231 New Taipei City (TW); Tseng, Yung-Chao, 231 New Taipei City (TW)
(74) Representative: Harrasz, Julia Konstanze

(56) References cited:
- JP-A- 2012 070 310
- US-A1- 2002 150 297
- US-A1- 2011 055 773
- US-A1- 2011 185 300

## Description

The present application generally relates to image processing methods and apparatus, and more particularly relates to methods, apparatus and computer program products for cropping a screen frame by touch gestures.

### BACKGROUND

To fit today's busy life, different space-efficient and highly portable mobile apparatuses are developed. Taking personal digital assistants (PDA), PDA phones, and smart phones as examples, they not only offer various functions as conventional communication apparatuses do, but also allow the users to edit files, send/receive e-mails, browse web pages, and perform instant messaging through built-in operating system (OS).

As to a light, slim, and small portable electronic apparatus, the volume thereof has to be very small. Thus, if both a screen and a keyboard are disposed on the electronic apparatus, the size of the screen has to be reduced. To dispose a larger screen within a limited space, a touch screen has been developed recently, in which a keyboard and a screen are integrated and served as the input interface of a portable electronic apparatus, so that both the cost and the surface area for disposing a conventional keyboard are saved.

The operation of the touch screen is very simple and straightforward. A user can perform various operations on the screen by simply touching the screen with a stylus or a finger. Thus, touch screen is a very convenient input interface. However, how to simplify touch gestures and allow a user to operate screen objects or even edit an entire screen frame is an object to be accomplished in the industry.

### SUMMARY OF THE APPLICATION

Accordingly, the present application is directed to a screen frame cropping method, apparatus, and computer program product according to the appended claims.

The present application provides a screen frame cropping method, a screen frame cropping apparatus, and a computer program product. In the present application, two touches performed by a user on a touch screen are detected, and when these two touches satisfy a predetermined condition, a cropping area is defined to crop a screen frame according to the touch positions of these two touches, so that the cropping operation is simplified. Besides being stored as a single image file, the cropped frame can also be stored as an image file and/or a text file through a character recognition technique. Thereby, a user is allowed to crop screen frames through simple touch operations.

These and other exemplary embodiments, features, aspects, and advantages of the application will be described and become more apparent from the detailed description of exemplary embodiments when read in conjunction with accompanying drawings.

### BRIEF DESCRIPTION OF THE DRAWINGS

FIG. 1 is a block diagram of a screen frame cropping apparatus according to an embodiment of the present application;
FIG. 2 is a flowchart of a screen frame cropping method according to an embodiment of the present application;
FIG. 3 to 7 illustrate examples of screen frame cropping methods;
FIG. 8 is a flowchart of a screen frame cropping method according to an embodiment of the present application;
FIG. 9 illustrates an example of a screen frame cropping method ;
FIG. 10 illustrates an example of a screen frame cropping method according to an embodiment of the present application;
FIG. 11 illustrates an example of a screen frame cropping method according to an embodiment of the present application.

### DESCRIPTION OF THE EMBODIMENTS

It can be observed in an image cropping operation that the major action is to define a cropping area. If the object to be cropped is the screen frame displayed by an electronic apparatus, the cropping area can be defined by using the borders of the screen frame as parts of the cropping area. Thereby, in the present application, a cropping area is defined by taking both the touch operations of a user and the corresponding frame borders into consideration, and whether a cropping operation is executed is determined according to the displacements and durations of the touch operations, so that the user can quickly and conveniently crop screen frames.

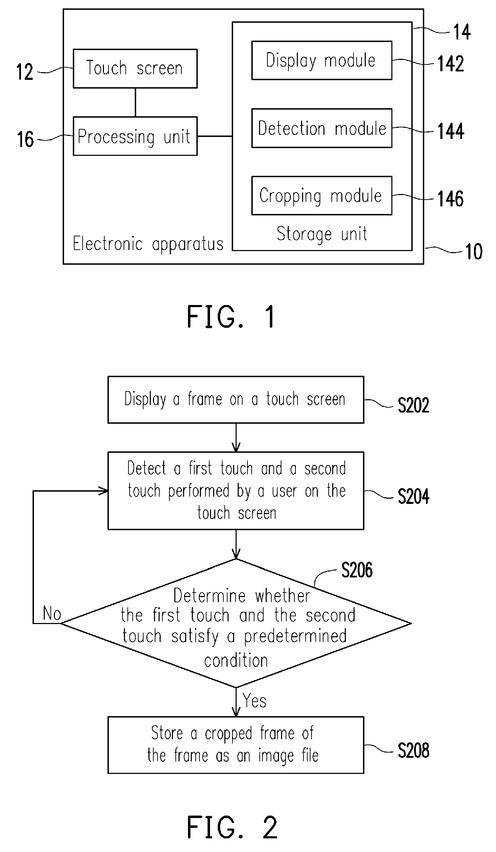

FIG. 1 is a block diagram of a screen frame cropping apparatus according to an embodiment of the present application. Referring to FIG. 1, the electronic apparatus 10 in the present embodiment may be a cell phone, a smart phone, a personal digital assistant (PDA), a PDA phone, a laptop, or a tablet computer. The electronic apparatus 10 includes a touch screen 12, a storage unit 14, and one or more processing units 16. The functions of aforementioned components will be respectively explained below.

The touch screen 12 is fabricated by integrating resistive, capacitive, or any other type of touch sensing devices with a liquid crystal display (LCD), and which can detect the touch operations performed by a user at the same time when displaying frames of the electronic apparatus 10.

The storage unit 14 is one or a combination of a stationary or mobile random access memory (RAM), read-only memory (ROM), flash memory, hard disk, or any other similar device, and which records a plurality of modules that can be executed by the processing units 16. These modules can be loaded into the processing units 16 to execute a screen frame cropping function.

The processing units 16 is one or a combination of a central processing unit (CPU), a programmable general- or specific-purpose microprocessor, a digital signal processor (DSP), a programmable controller, application specific integrated circuits (ASIC), a programmable logic device (PLD), or any other similar device. The processing units 16 are coupled to the touch screen 12 and the storage unit 14. The processing units 16 access and execute the modules recorded in the storage unit 14 to execute a screen frame cropping function.

Aforementioned modules include a display module 142, a detection module 144, and a cropping module 146. These modules may be computer programs which can be loaded into the processing units 16 to execute the screen frame cropping function. Below, how the electronic apparatus 10 crops a screen frame will be described in detail with reference to embodiments of the present application.

FIG. 2 is a flowchart of a screen frame cropping method according to an embodiment of the present application. Referring to FIG. 2, the screen frame cropping method in the present embodiment is suitable for the electronic apparatus 10 illustrated in FIG. 1. Below, the screen frame cropping method will be described in detail with reference to various components of the electronic apparatus 10.

First, the display module 142 displays a frame on the touch screen 12 (step S202). Then, the detection module 144 detects a first touch and a second touch performed by a user on the touch screen 12 (step S204) and determines whether the first touch and the second touch satisfy a predetermined condition (step S206). The predetermined condition may be determined by one or a combination of the displacements, starting positions, ending positions, and durations of the first touch and the second touch.

To be specific, in an embodiment, the detection module 144 detects a first displacement of the first touch on the touch screen 12 and a second displacement of the second touch on the touch screen 12 and determines whether one or both of the first displacement and the second displacement are greater than a predetermined value, so as to determine whether the first touch and the second touch satisfy a predetermined condition. The first displacement and the second displacement may be the displacements of the first touch and the second touch in the direction of the axis X or the axis Y on the touch screen 12 or 2-dimensional displacements on the touch screen 12, which is not limited in the present application. In addition, aforementioned predetermined value may be the product of the screen length (or width) and a predetermined ratio. However, the predetermined value is not limited in the present application.

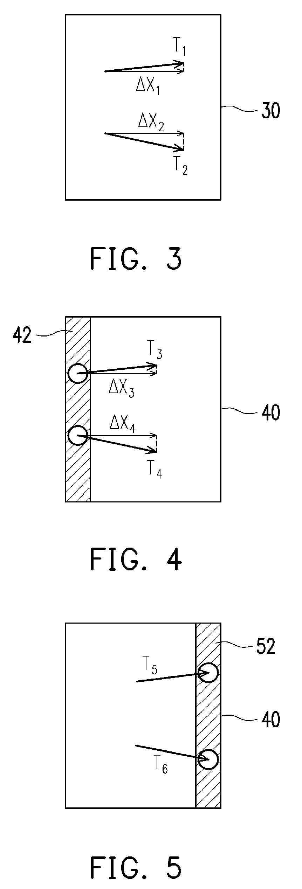

FIG. 3 illustrates an example of a screen frame cropping method. Referring to FIG. 3, in the present example, the electronic apparatus detects a first displacement ΔX1 of a first touch T1 in the width direction (i.e., the direction of the axis X) of the touch screen 30 and a second displacement ΔX2 of a second touch T2 in the width direction of the touch screen 30 and determines whether one of the two displacements exceeds 60% of the screen width, so as to determine whether the first touch T1 and the second touch T2 satisfy a predetermined condition and execute a screen frame cropping operation accordingly.

In an example, besides determining whether the displacements of the first touch and the second touch are greater than a predetermined value, the detection module 144 further determines whether one or both of the first touch and the second touch start from a predetermined starting border area of the touch screen 12, so as to determine whether the first touch and the second touch satisfy the predetermined condition. Aforementioned predetermined starting border area may be the left/right side area, the top/bottom side area, or both the left/right and top/bottom side area of the touch screen 12 and has a specific width (for example, 1-15 pixels) to the borders of the touch screen 12. However, the predetermined starting border area is not limited in the present application.

FIG. 4 illustrates an example of a screen frame cropping method. Referring to FIG. 4, in the present example, the electronic apparatus first determines whether a third touch T3 and a fourth touch T4 start from a predetermined starting border area 42 of the touch screen 40. When both the third touch T3 and the fourth touch T4 start from the predetermined starting border area 42 of the touch screen 40, the electronic apparatus detects a third displacement ΔX3 of the third touch T3 in the width direction (i.e., the direction of the axis X) of the touch screen 40 and a fourth displacement ΔX4 of the fourth touch T4 in the width direction of the touch screen 40 and determines whether one of the third displacement ΔX3 and the fourth displacement ΔX4 exceeds 60% of the screen width, so as to determine whether the third touch T3 and the fourth touch T4 satisfy a predetermined condition and execute a screen frame cropping operation accordingly.

In an example, the detection module 144 determines whether the first touch and the second touch satisfy the predetermined condition according to whether one or both of the first touch and the second touch end at the predetermined ending border area of the touch screen 12. Similarly, the predetermined ending border area may be the left/right side area, the top/bottom side area, or both the left/right and top/bottom side area of the touch screen 12 and has a specific width (for example, 1-15 pixels) to the borders of the touch screen 12. However, the predetermined ending border area is not limited in the present application.

FIG. 5 illustrates an example of a screen frame cropping method. Referring to FIG. 5, in the present example, the electronic apparatus determines whether a fifth touch T5 and a sixth touch T6 end at a predetermined ending border area 52 of the touch screen 50. When both the fifth touch T5 and the sixth touch T6 end at the predetermined ending border area 52 of the touch screen 50, the electronic apparatus determines that the fifth touch T5 and the sixth touch T6 satisfy the predetermined condition and executes a screen frame cropping operation accordingly.

In an example, the detection module 144 detects a first touch time of the first touch on the touch screen 12 and a second touch time of the second touch on the touch screen 12 and determines whether one or both of the first touch time and the second touch time is greater than a predetermined value, so as to determine whether the first touch and the second touch satisfy the predetermined condition. Aforementioned predetermined value may be 1-3 seconds. However, the predetermined value is not limited in the present application.

It should be noted that in an example, the predetermined condition can be any combination of the displacements, starting positions, ending positions, and touch durations mentioned in foregoing embodiments, and these factors can be set to be applicable to one or both of the first touch and the second touch. For example, when both the first touch and the second touch start from the predetermined starting border area of the touch screen and end at the predetermined ending border area of the touch screen, it can be determined that the first touch and the second touch satisfy the predetermined condition and a screen frame cropping operation can be executed accordingly.

Referring to FIG. 2 again, when the detection module 144 determines that the first touch and the second touch satisfy the predetermined condition, the cropping module 146 stores a cropped frame of the frame displayed on the touch screen 12 as an image file (step S208). Contrarily, when the detection module 144 determines that the first touch and the second touch do not satisfy the predetermined condition, step S204 is executed again so that the detection module 144 continues to detect other touches performed by the user on the touch screen 12. Aforementioned cropped frame is determined according to at least one first touch position of the first touch and at least one second touch position of the second touch.

To be specific, in an example, the cropping module 146 defines a rectangular cropping area by taking both the touch positions of the first touch and the second touch and the borders of the touch screen 12 into consideration. For example, the cropping module 146 defines the upper and lower borders of the cropping area by using the touch positions of the first touch and the second touch and defines the left and right borders of the cropping area by using the left and right borders of the touch screen 12. Similarly, the cropping module 146 may also define the left and right borders of the cropping area by using the touch positions of the first touch and the second touch and defines the upper and lower borders of the cropping area by using the upper and lower borders of the touch screen 12. Aforementioned touch positions of the first touch and the second touch may be the touch starting positions or the touch ending positions of the first touch and the second touch, the positions of the first touch and the second touch when the first touch and the second touch satisfy the predetermined condition, or the highest/lowest positions or leftmost/rightmost positions on the moving paths of the first touch and the second touch. However, the definition of the touch positions of the first touch and the second touch is not limited in the present application. Additionally, in another example, the cropping module 146 may not use the borders of the touch screen 12 and define the left, right, upper, and lower borders of the cropping area by using only the highest, lowest, leftmost, and rightmost positions on the moving paths of the first touch and the second touch. However, the present application is not limited thereto.

Below, the definition of the upper and lower borders of the cropping area by using the touch positions of a first touch and a second touch and the definition of the left and right borders of the cropping area by using the left and right borders of the touch screen 12 will be respectively described in detail with reference to an example. Similarly, these examples are also applicable to the definition of the left and right borders of the cropping area by using the touch positions of the first touch and the second touch and the definition of the upper and lower borders of the cropping area by using the upper and lower borders of the touch screen 12.

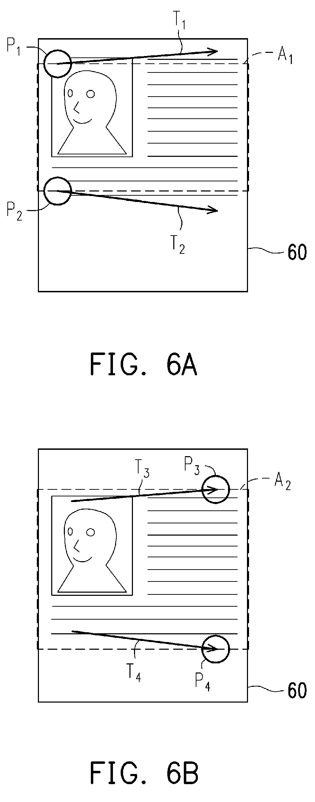

FIGs. 6A-6F illustrate an example of a screen frame cropping method. Referring to FIG. 6A first, in the present example, the electronic apparatus defines the upper and lower borders of a cropping area A1 by using the touch starting position P1 of a first touch T1 and the touch starting position P2 of a second touch T2 and defines the left and right borders of the cropping area A1 by using the left and right borders of the touch screen 60.

Then, referring to FIG. 6B, in the present example, the electronic apparatus defines the upper and lower borders of a cropping area A2 by using the touch ending positions P3 of a third touch T3 and the touch ending positions P4 of a fourth touch T4 and defines the left and right borders of the cropping area A2 by using the left and right borders of the touch screen 60.

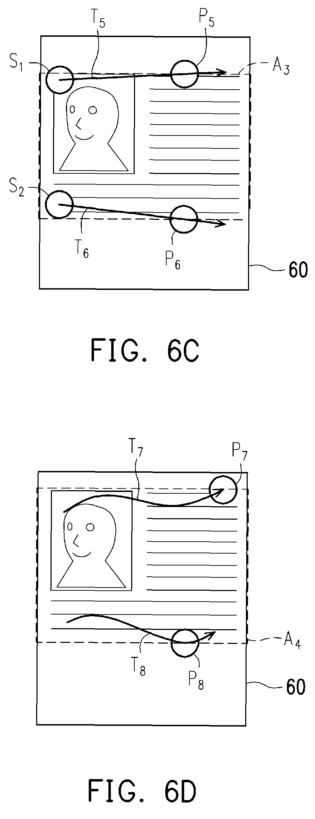

Next, referring to FIG. 6C, in the present example, the electronic apparatus defines the upper and lower borders of a cropping area A3 by using the highest and lowest positions (i.e. positions P5 and P6) among the touch starting position S1 of a fifth touch T5 and the touch starting position S2 of a sixth touch T6 and the positions P5 and P6 when the fifth touch T5 and the sixth touch T6 satisfy a predetermined condition (for example, the displacement of one of the fifth touch T5 and the sixth touch T6 exceeds 60% of the width of the touch screen 60), and the electronic apparatus defines the left and right border of the cropping area A3 by using the left and right borders of the touch screen 60.

Thereafter, referring to FIG. 6D, in the present example, the electronic apparatus defines the upper and lower borders of a cropping area A4 by using the highest and lowest positions (i.e. positions P7 and P8) on the moving paths of a seventh touch T7 and an eighth touch T8 and defines the left and right borders of the cropping area A4 by using the left and right borders of the touch screen 60.

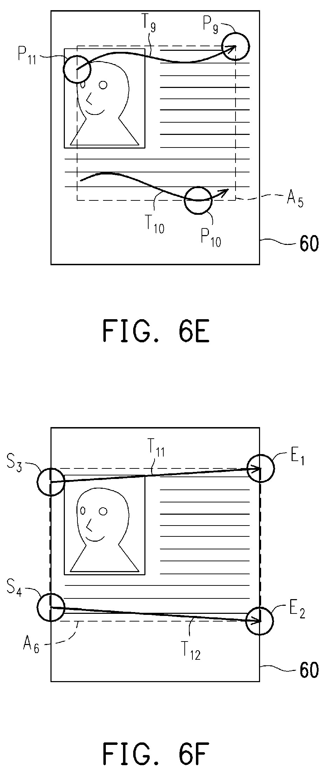

Next, referring to FIG. 6E, in the present example, the electronic apparatus defines the upper and lower borders and the left and right borders of a cropping area A5 by using the highest and lowest positions (i.e. positions P9 and P10) and the leftmost and rightmost positions (i.e. positions P11 and P9) on the moving paths of a ninth touch T9 and a tenth touch T10.

Finally, referring to FIG. 6F, in the present example, the electronic apparatus defines the upper, lower, left, and right borders of a cropping area A6 by using a first starting touch position S3 of an eleventh touch T11, a second starting touch position S4 of a twelfth touch T12, a first ending touch position E1 of the eleventh touch T11, b and a second ending touch position E2 of the twelfth touch T12.

After the electronic apparatus defines the cropping area through one of the techniques described above, the electronic apparatus crops the frame within the cropping area into a cropped frame and stores the cropped frame as an image file. Thereby, the user can select and crop an interested part in a frame displayed on the touch screen and obtain a file of the cropped frame through simple touch operations.

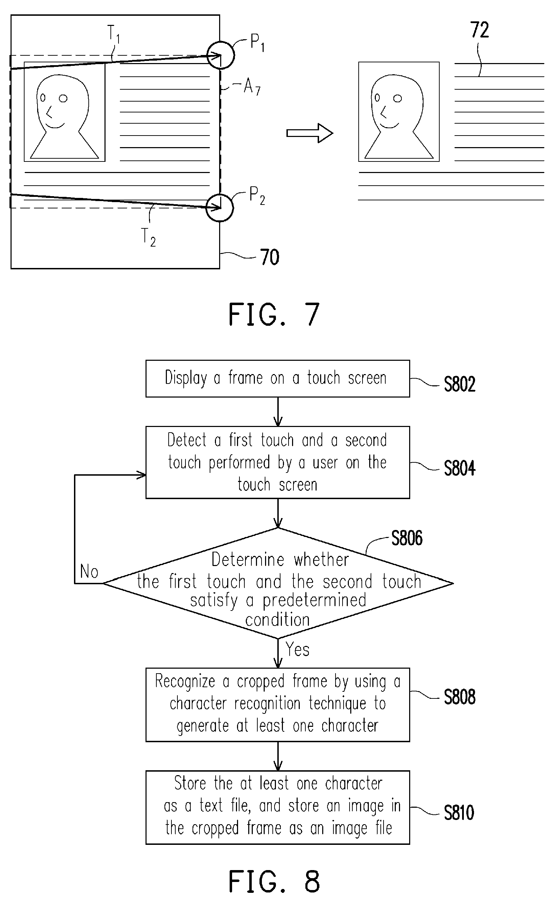

FIG. 7 illustrates an example of a screen frame cropping method. Referring to FIG. 7, in the present example, the electronic apparatus defines the upper, lower, left, and right borders of a cropping area A7 by using the highest and lowest positions P1 and P2 of the first touch T1 and the second touch T2 and the left and right borders of the touch screen 70. After the cropping area A7 is defined, the electronic apparatus crops the frame within the cropping area A7 into a cropped frame 72 and stores the cropped frame 72 as an image file.

It should be noted that in an embodiment, after the cropping area is defined, the electronic apparatus further recognizes the cropped frame by using a character recognition technique through a character recognition module (not shown) to generate at least one character and stores the recognized character as a text file.

FIG. 8 is a flowchart of a screen frame cropping method according to an embodiment of the present application. Referring to FIG. 8, the screen frame cropping method in the present embodiment is adapted to the electronic apparatus 10 illustrated in FIG. 1. Below, the screen frame cropping method will be described in detail with reference to various components of the electronic apparatus 10.

First, the display module 142 displays a frame on the touch screen 12 (step S802). Then, the detection module 144 detects a first touch and a second touch performed by a user on the touch screen 12 (step S804) and determines whether the first touch and the second touch satisfy a predetermined condition (step S806). Steps S802-S806 are the same as or similar to steps S202-S206 in the embodiment described above and therefore will not be described herein.

The differences from the embodiment described above lie in that, in the present embodiment, when the detection module 144 determines that the first touch and the second touch satisfy the predetermined condition, the electronic apparatus 10 further recognizes the cropped frame through a character recognition module (not shown) by using a character recognition technique to generate at least one character (step S806). After that, the character recognition module stores the recognized characters as a text file, and the cropping module 146 stores the image in the cropped frame as an image file (step S808). Contrarily, when the detection module 144 determines that the first touch and the second touch do not satisfy the predetermined condition, step S804 is executed again so that the detection module 144 continues to detect other touches performed by the user on the touch screen 12.

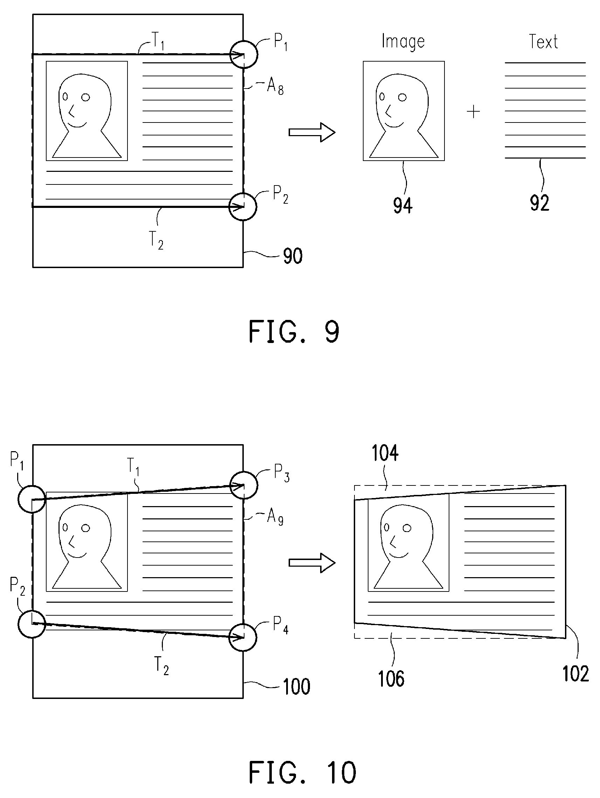

FIG. 9 illustrates an example of a screen frame cropping method. Referring to FIG. 9, in the present example, the electronic apparatus defines the upper, lower, left, and right borders of a cropping area A8 by using the highest and lowest positions P1 and P2 of the first touch T1 and the second touch T2 and the left and right borders of the touch screen 90. After the cropping area A8 is determined, the electronic apparatus recognizes the cropped frame by using a character recognition technique to generate at least one character 92 and stores the recognized characters as a text file. Besides, the electronic apparatus stores the image 94 within the cropping area A7 as an image file.

Besides the definitions of the rectangular cropping area and rectangular cropped frame described above, in an embodiment, the electronic apparatus may also determine the cropping area according to a first moving path of the first touch and a second moving path of the second touch and keep only the frame within the cropping area visible while the frame within the transparent area outside the cropping area is transparent.

FIG. 10 illustrates an example of a screen frame cropping method according to an embodiment of the present application. Referring to FIG. 10, in the present example, the electronic apparatus defines a cropping area A9 (i.e., the area defined by the touch points P1-P4) by using the moving paths of the first touch T1 and the second touch T2 and the left and right borders of the touch screen 100. While cropping the frame, the electronic apparatus stores the cropped frame 102 as a rectangular image file. However, only the frame within the cropping area A9 is visible, while the frame within the transparent areas 104 and 106 outside the cropping area A9 is transparent.

In the embodiments and examples described above, except the definition of the cropping
area by using the highest, lowest, leftmost, and rightmost positions of the first touch and the second touch, the borders of the touch screen are used in every definition of the cropping area, and the borders involved are opposite borders (i.e., the left and right borders or the upper and lower borders) of the touch screen. However, in another embodiment, in case that the first touch and the second touch start from or end at different borders, the present application provides a technique of defining a cropping area by using adjacent borders (for example, the left border and the lower border, or the right border and the upper border). To be specific, in case that the first touch and the second touch start from or end at different borders, the electronic apparatus defines the cropping area according to a first moving path of the first touch, a second moving path of the second touch, and the cross points between these two moving paths and the borders of the touch screen. While cropping the frame, the electronic apparatus keeps the frame within the cropping area visible while the frame within the transparent areas outside the cropping area is transparent.

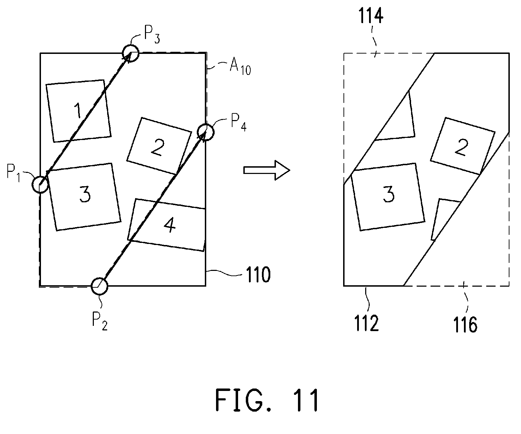

FIG. 11 illustrates an example of a screen frame cropping method according to an embodiment of the present application. Referring to FIG. 11, in the present example, the electronic apparatus defines a cropping area A10 by using the moving paths of the first touch T1 and the second touch T2 and the cross points P1-P4 between these two moving paths and the borders of the touch screen. While cropping the frame, the electronic apparatus stores the cropped frame 112 as a rectangular image file. However, only the frame within the cropping area A10 is visible, while the frame within the transparent areas 114 and 116 outside the cropping area A10 is transparent.

Through the screen frame cropping method described above, even if the first touch and the second touch performed by a user start from or end at different borders, the electronic apparatus can still crop the frame selected by the user and store the cropped frame as an image file. It should be mentioned that the screen frame cropping method described above is also applicable when the first touch and the second touch start from different borders but end at the same border or when the first touch and the second touch start from the same border but end at different borders. The present application is not limited herein.

The present application further provides a computer program product for executing various steps of the screen frame cropping method described above. The computer program product is composed of a plurality of code snippets (for example, an organization chart establishment code snippet, a form approval code snippet, a settings code snippet, and a deployment code snippet). After these code snippets are loaded into an electronic apparatus and executed by the same, the steps of the screen frame cropping method described above can be accomplished.

As described above, the present application provides a screen frame cropping method, a screen frame cropping apparatus, and a computer program product. In the present application, two touches performed by a user on a touch screen are detected, and a cropping operation and a cropping area are defined according to the starting positions, ending positions, moving paths, displacements, and touch durations of these two touches. Thereby, a user can crop screen frames through simple touch operations.

It will be apparent to those skilled in the art that various modifications and variations can be made to the structure of the present application without departing from the scope of the application. In view of the foregoing, it is intended that the present application cover modifications and variations of this application provided they fall within the scope of the following claims and their equivalents.

## Claims

1. A screen frame cropping method, adapted to an electronic apparatus (10) having a touch screen (12, 30, 40, 50, 60, 70, 90, 100), the method comprising:
displaying a frame on the touch screen (12);
detecting a first touch (T1) and a second touch (T2) performed by a user on the touch screen (12, 30, 40, 50, 60, 70, 90, 100);
determining whether the first touch (T1) and the second touch (T2) satisfy a predetermined condition, the predetermined condition being determined by one or
a combination of displacements, starting positions, ending positions, and durations of the first touch and the second touch; and
when the first touch (T1) and the second touch (T2) satisfy the predetermined condition, storing a cropped frame (102, 112) of the frame as an image file, the cropped frame (102, 112) being determined according to at least one first touch position of the first touch (T1) and at least one second touch position of the second touch (T2),
**characterized in that**
the cropped frame (102, 112) is a rectangle comprising a cropping area and a transparent area outside the cropping area, wherein the cropping area and the transparent area are determined according at least to a first moving path of the first touch (T1) and a second moving path of the second touch (T2) and the borders of the touch screen.

2. The screen frame cropping method according to claim 1 further comprising:
recognizing the cropped frame (102, 112) by using a character recognition technique to generate at least one character; and
storing the at least one character as a text file.

3. The screen frame cropping method according to claim 1, wherein the predetermined condition comprises:
one of a first touch time of the first touch (T1) and a second touch time of the second touch (T2) being greater than a predetermined value.

4. A screen frame cropping apparatus, comprising:
a touch screen (12, 30, 40, 50, 60, 70, 90, 100);
a storage unit (14), recording a plurality of modules; and
one or a plurality of processing units (16), coupled to the touch screen (12, 30, 40, 50, 60, 70, 90, 100) and the storage unit (14), and accessing and executing the modules recorded in the storage unit (14), wherein the modules comprise:
a display module (142), displaying a frame on the touch screen (12, 30, 40, 50, 60, 70, 90, 100);
a detection module (144), detecting a first touch and a second touch performed by a user on the touch screen and determining whether the first touch (T1) and the second touch (T2) satisfy a predetermined condition, the predetermined condition being determined by one or a combination of displacements, starting positions, ending positions, and durations of the first touch and the second touch; and
a cropping module (164), storing a cropped frame (102, 112) of the frame as an image file when the first touch (T1) and the second touch (T2) satisfy the predetermined condition, the cropped frame (102, 112) being determined according to at least one first touch position of the first touch (T1) and at least one second touch position of the second touch (T2),
**characterized in that**
the cropped frame (102, 112) is a rectangle comprising a cropping area (A9, A10) and a transparent area (104, 106, 114, 116) outside the cropping area (A9, A10), wherein the cropping area (A9, A10) and the transparent area (104, 106, 114, 116) are determined according to a first moving path of the first touch (T1) and a second moving path of the second touch (T2) and the borders of the touch screen.

5. The screen frame cropping apparatus according to claim 4, wherein the modules further comprise:
a character recognition module, recognizing the cropped frame (102, 112) by using a character recognition technique to generate at least one character, and storing the at least one character as a text file.

6. The screen frame cropping apparatus according to claim 4, wherein the predetermined condition comprises one of a first touch time of the first touch (T1) and a second touch time of the second touch (T2) being greater than a predetermined value.

7. A computer program product, loaded into an electronic apparatus (100) to execute the following steps:
displaying a frame on a touch screen (12, 30, 40, 50, 60, 70, 90, 100) of the electronic apparatus (100);
detecting a first touch (T1) and a second touch (T2) performed by a user on the touch screen (12, 30, 40, 50, 60, 70, 90, 100);
determining whether the first touch (T1) and the second touch (T2) satisfy a predetermined condition, the predetermined condition being determined by one or a combination of displacements, starting positions, ending positions, and durations of the first touch and the second touch; and
when the first touch (T1) and the second touch (T2) satisfy the predetermined condition, storing a cropped frame (102, 112) of the frame as an image file;
wherein the cropped frame (102, 112) is determined according to at least one first touch position of the first touch (T1) and at least one second touch position of the second touch (T2),
**characterized in that**
the cropped frame (102, 112) is a rectangle comprising a cropping area (A9, A10) and a transparent area (104, 106, 114, 116) outside the cropping area (A9, A10), wherein the cropping area (A9, A10) and the transparent area (104, 106, 114, 116) are determined according to a first moving path of the first touch (T1) and a second moving path of the second touch (T2) and the borders of the touch screen.

## Patentansprüche

1. Ein Verfahren zum Zuschneiden eines Bildschirmrahmens, das an eine elektronische Vorrichtung (10) angepasst ist, die einen Berührungsbildschirm (12, 30, 40, 50, 60, 70, 90, 100) aufweist, wobei das Verfahren Folgendes beinhaltet:
Anzeigen eines Rahmens auf dem Berührungsbildschirm (12);
Erfassen einer ersten Berührung (T1) und einer zweiten Berührung (T2), die von einem Benutzer auf dem Berührungsbildschirm (12, 30, 40, 50, 60, 70, 90, 100) vorgenommen werden;
Bestimmen, ob die erste Berührung (T1) und die zweite Berührung (T2) eine vorgegebene Bedingung erfüllen, wobei die vorgegebene Bedingung durch eine oder eine Kombination von Verschiebungen, Startpositionen, Endpositionen und einer Zeitdauer der ersten Berührung und der zweiten Berührung bestimmt wird; und
wenn die erste Berührung (T1) und die zweite Berührung (T2) die vorgegebene Bedingung erfüllen, Speichern eines zugeschnittenen Rahmens (102, 112) des Rahmens als eine Bilddatei, wobei der zugeschnittene Rahmen (102, 112) gemäß zumindest einer ersten Berührungsposition der ersten Berührung (T1) und zumindest einer zweiten Berührungsposition der zweiten Berührung (T2) bestimmt wird,
**dadurch gekennzeichnet, dass**
der zugeschnittene Rahmen (102, 112) ein Rechteck ist, das einen Zuschneidebereich und einen transparenten Bereich außerhalb des Zuschneidebereichs beinhaltet, wobei der Zuschneidebereich und der transparente Bereich nach zumindest einem ersten Bewegungspfad der ersten Berührung (T1) und einem zweiten Bewegungspfad der zweiten Berührung (T2) und der Grenzen des Berührungsbildschirms bestimmt werden.

2. Verfahren zum Zuschneiden eines Bildschirmrahmens gemäß Anspruch 1, das weiterhin Folgendes beinhaltet:
Erkennen des zugeschnittenen Rahmens (102, 112) durch eine Zeichenerkennungsmethode, um mindestens ein Zeichen zu erzeugen; und
Speichern des zumindest einen Zeichens als eine Textdatei.

3. Verfahren zum Zuschneiden eines Bildschirmrahmens gemäß Anspruch 1, wobei die vorgegebene Bedingung Folgendes beinhaltet:
eine von einer ersten Berührungszeit der ersten Berührung (T1) und einer zweiten Berührungszeit der zweiten Berührung (T2) ist größer als ein vorgegebener Wert.

4. Eine Vorrichtung zum Zuschneiden eines Bildschirmrahmens, die Folgendes beinhaltet:
einen Berührungsbildschirm (12, 30, 40, 50, 60, 70, 90, 100);
eine Speichereinheit (14), die eine Vielzahl von Modulen aufzeichnet; und
eine oder eine Vielzahl von Verarbeitungseinheiten (16), die mit dem Berührungsbildschirm (12, 30, 40, 50, 60, 70, 90, 100) und der Speichereinheit (14) gekoppelt sind, und Zugreifen auf die in der Speichereinheit (14) aufgezeichneten Module und Ausführen dieser, wobei die Module Folgendes beinhalten:
ein Anzeigemodul (142), das einen Rahmen auf dem Berührungsbildschirm (12, 30, 40, 50, 60, 70, 90, 100) anzeigt;
ein Erfassungsmodul (144), das eine erste Berührung und eine zweite Berührung, die durch einen Benutzer auf dem Berührungsbildschirm vorgenommen werden, erfasst und bestimmt, ob die erste Berührung (T1) und die zweite Berührung (T2) eine vorgegebene Bedingung erfüllen, wobei die vorgegebene Bedingung durch eine oder eine Kombination von Verschiebungen, Startpositionen, Endpositionen und einer Zeitdauer der ersten Berührung und der zweiten Berührung bestimmt wird; und
ein Zuschneidemodul (164), das einen zugeschnittenen Rahmen (102, 112) des Rahmens als eine Bilddatei speichert, wenn die erste Berührung (T1) und die zweite Berührung (T2) die vorgegebene Bedingung erfüllen, wobei der zugeschnittene Rahmen (102, 112) gemäß zumindest einer ersten Berührungsposition der ersten Berührung (T1) und zumindest einer zweiten Berührungsposition der zweiten Berührung (T2) bestimmt wird,
**dadurch gekennzeichnet, dass**
der zugeschnittene Rahmen (102, 112) ein Rechteck ist, das einen Zuschneidebereich (A9, A10) und einen transparenten Bereich (104, 106, 114, 116) außerhalb des Zuschneidebereichs (A9, A10) beinhaltet, wobei der Zuschneidebereich (A9, A10) und der transparente Bereich (104, 106, 114, 116) gemäß zumindest einem ersten Bewegungspfad der ersten Berührung (T1) und einem zweiten Bewegungspfad der zweiten Berührung (T2) und der Grenzen des Berührungsbildschirms bestimmt werden.

5. Vorrichtung zum Zuschneiden eines Bildschirmrahmens gemäß Anspruch 4, wobei die Module weiterhin Folgendes beinhalten:
ein Zeichenerkennungsmodul, das den zugeschnittenen Rahmen (102, 112) unter Verwendung einer Zeichenerkennungsmethode erkennt, um zumindest ein Zeichen zu erzeugen, und das zumindest eine Zeichen als eine Textdatei speichert.

6. Vorrichtung zum Zuschneiden eines Bildschirmrahmens gemäß Anspruch 4, wobei die vorgegebene Bedingung beinhaltet, dass eine von einer ersten Berührungszeit der ersten Berührung (T1) und einer zweiten Berührungszeit der zweiten Berührung (T2) größer als ein vorgegebener Wert ist.

7. Ein Computerprogrammprodukt, das in eine elektronische Vorrichtung (100) geladen ist, um die folgenden Schritte auszuführen:
Anzeigen eines Rahmens auf einem Berührungsbildschirm (12, 30, 40, 50, 60, 70, 90, 100) der elektronischen Vorrichtung (100);
Erfassen einer ersten Berührung (T1) und einer zweiten Berührung (T2), die durch einen Benutzer auf dem Berührungsbildschirm (12, 30, 40, 50, 60, 70, 90, 100) vorgenommen werden;
Bestimmen, ob die erste Berührung (T1) und die zweite Berührung (T2) eine vorgegebene Bedingung erfüllen, wobei die vorgegebene Bedingung durch eine oder eine Kombination von Verschiebungen, Startpositionen, Endpositionen und einer Zeitdauer der ersten Berührung und der zweiten Berührung bestimmt wird; und
wenn die erste Berührung (T1) und die zweite Berührung (T2) die vorgegebene Bedingung erfüllen, Speichern eines zugeschnittenen Rahmens (102, 112) des Rahmens als eine Bilddatei;
wobei der zugeschnittene Rahmen (102, 112) gemäß zumindest einer ersten Berührungsposition der ersten Berührung (T1) und zumindest einer zweiten Berührungsposition der zweiten Berührung (T2) bestimmt wird,
**dadurch gekennzeichnet, dass**
der zugeschnittene Rahmen (102, 112) ein Rechteck ist, das einen Zuschneidebereich (A9, A10) und einen transparenten Bereich (104, 106, 114, 116) außerhalb des Zuschneidebereichs (A9, A10) beinhaltet, wobei der Zuschneidebereich (A9, A10) und der transparente Bereich (104, 106, 114, 116) gemäß zumindest einem ersten Bewegungspfad der ersten Berührung (T1) und einem zweiten Bewegungspfad der zweiten Berührung (T2) und der Grenzen des Berührungsbildschirms bestimmt werden.

## Revendications

1. Une méthode de recadrage de cadre d'écran, conçue pour un appareil électronique (10) ayant un écran tactile (12, 30, 40, 50, 60, 70, 90, 100), la méthode comprenant :
l'affichage d'un cadre sur l'écran tactile (12) ;
la détection d'un premier toucher (T1) et d'un deuxième toucher (T2) effectués par un utilisateur sur l'écran tactile (12, 30, 40, 50, 60, 70, 90, 100) ;
la détermination pour savoir si le premier toucher (T1) et le deuxième toucher (T2) satisfont à une condition prédéterminée, la condition prédéterminée étant déterminée par un ou une combinaison de déplacements, positions de départ, positions finales et durées du premier toucher et du deuxième toucher ; et
lorsque le premier toucher (T1) et le deuxième toucher (T2) satisfont à la condition prédéterminée, le stockage d'un cadre recadré (102, 112) du cadre sous la forme d'un fichier image, le cadre recadré (102, 112) étant déterminé en fonction d'au moins une première position de toucher du premier toucher (T1) et d'au moins une deuxième position de toucher du deuxième toucher (T2),
**caractérisée en ce que**
le cadre recadré (102, 112) est un rectangle comprenant une zone de recadrage et une zone transparente en dehors de la zone de recadrage, la zone de recadrage et la zone transparente étant déterminées en fonction au moins d'un premier trajet de mouvement du premier toucher (T1) et d'un deuxième trajet de mouvement du deuxième toucher (T2) et des bords de l'écran tactile.

2. La méthode de recadrage de cadre d'écran selon la revendication 1 comprenant en outre :
la reconnaissance du cadre recadré (102, 112) grâce à l'utilisation d'une technique de reconnaissance de caractères pour générer au moins un caractère ; et
le stockage de cet au moins un caractère sous la forme d'un fichier texte.

3. La méthode de recadrage de cadre d'écran selon la revendication 1, dans laquelle la condition prédéterminée comprend :
soit un premier temps de toucher du premier toucher (T1), soit un deuxième temps de toucher du deuxième toucher (T2) qui est plus grand qu'une valeur prédéterminée.

4. Un appareil de recadrage de cadre d'écran, comprenant :
un écran tactile (12, 30, 40, 50, 60, 70, 90, 100) ;
une unité de stockage (14), enregistrant une pluralité de modules ; et
une ou une pluralité d'unités de traitement (16), couplées à l'écran tactile (12, 30, 40, 50, 60, 70, 90, 100) et à l'unité de stockage (14), et assurant l'accès aux modules enregistrés dans l'unité de stockage (14) et assurant leur exécution, dans lequel les modules comprennent :
un module d'affichage (142), affichant un cadre sur l'écran tactile (12, 30, 40, 50, 60, 70, 90, 100) ;
un module de détection (144), détectant un premier toucher et un deuxième toucher effectués par un utilisateur sur l'écran tactile et déterminant si le premier toucher (T1) et le deuxième toucher (T2) satisfont à une condition prédéterminée, la condition prédéterminée étant déterminée par un ou une combinaison de déplacements, positions de départ, positions finales et durées du premier toucher et du deuxième toucher ; et
un module de recadrage (164), stockant un cadre recadré (102, 112) du cadre sous la forme d'un fichier image lorsque le premier toucher (T1) et le deuxième toucher (T2) satisfont à la condition prédéterminée, le cadre recadré (102, 112) étant déterminé en fonction d'au moins une première position de toucher du premier toucher (T1) et d'au moins une deuxième position de toucher du deuxième toucher (T2),
**caractérisé en ce que**
le cadre recadré (102, 112) est un rectangle comprenant une zone de recadrage (A9, A10) et une zone transparente (104, 106, 114, 116) en dehors de la zone de recadrage (A9, A10), la zone de recadrage (A9, A10) et la zone transparente (104, 106, 114, 116) étant déterminées en fonction d'un premier trajet de mouvement du premier toucher (T1) et d'un deuxième trajet de mouvement du deuxième toucher (T2) et des bords de l'écran tactile.

5. L'appareil de recadrage de cadre d'écran selon la revendication 4, dans lequel les modules comprennent en outre :
un module de reconnaissance de caractères, reconnaissant le cadre recadré (102, 112) grâce à l'utilisation d'une technique de reconnaissance de caractères pour générer au moins un caractère, et stockant cet au moins un caractère sous la forme d'un fichier texte.

6. L'appareil de recadrage de cadre d'écran selon la revendication 4, dans lequel la condition prédéterminée comprend soit un premier temps de toucher du premier toucher (T1), soit un deuxième temps de toucher du deuxième toucher (T2) qui est plus grand qu'une valeur prédéterminée.

7. Un produit-programme informatique, chargé dans un appareil électronique (100) pour exécuter les étapes suivantes :
afficher un cadre sur un écran tactile (12, 30, 40, 50, 60, 70, 90, 100) de l'appareil électronique (100) ;
détecter un premier toucher (T1) et un deuxième toucher (T2) effectués par un utilisateur sur l'écran tactile (12, 30, 40, 50, 60, 70, 90, 100) ;
déterminer si le premier toucher (T1) et le deuxième toucher (T2) satisfont à une condition prédéterminée, la condition prédéterminée étant déterminée par un ou une combinaison de déplacements, positions de départ, positions finales et durées du premier toucher et du deuxième toucher ; et
lorsque le premier toucher (T1) et le deuxième toucher (T2) satisfont à la condition prédéterminée, stocker un cadre recadré (102, 112) du cadre sous la forme d'un fichier image ;
le cadre recadré (102, 112) étant déterminé en fonction d'au moins une première position de toucher du premier toucher (T1) et d'au moins une deuxième position de toucher du deuxième toucher (T2),
**caractérisé en ce que**
le cadre recadré (102, 112) est un rectangle comprenant une zone de recadrage (A9, A10) et une zone transparente (104, 106, 114, 116) en dehors de la zone de recadrage (A9, A10), la zone de recadrage (A9, A10) et la zone transparente (104, 106, 114, 116) étant déterminées en fonction d'un premier trajet de mouvement du premier toucher (T1) et d'un deuxième trajet de mouvement du deuxième toucher (T2) et des bords de l'écran tactile.
